# EUROPEAN PATENT APPLICATION

(11) **EP 4 534 370 A1**
(43) Date of publication of application: **09.04.2025**
(21) Application number: 22948638.6
(22) Date of filing: 30.06.2022
(51) Int. Cl.: B60W 20/00, B60W 10/08

(54) **CONTROL METHOD AND CONTROL DEVICE**

(71) Applicant: Shenzhen Yinwang Intelligent Technologies Co., Ltd., Shenzhen, Guangdong 518129 (CN)
(72) Inventor: WANG, Junhan, Shenzhen, Guangdong 518129 (CN); JIANG, Siwen, Shenzhen, Guangdong 518129 (CN); ZHANG, Zhimin, Shenzhen, Guangdong 518129 (CN); PENG, Lei, Shenzhen, Guangdong 518129 (CN)
(74) Representative: MERH-IP Matias Erny Reichl Hoffmann Patentanwälte PartG mbB
(86) International application number: PCT/CN2022/103174
(87) International publication number: WO 2024/000536

(57) **Abstract**

This application provides a control method and a control apparatus, to ensure both battery safety and a heating speed of a passenger compartment. The control method provided in this application may be applied to an intelligent vehicle. The control method may include: obtaining a heating request for a passenger compartment of a vehicle; starting an engine of the vehicle based on the heating request; heating the passenger compartment by using heat generated by the engine; and if a state of charge of a battery of the vehicle is greater than or equal to a preset state of charge, and a charging power of the battery is greater than or equal to a preset charging power, controlling the engine to idle and controlling a generator to be in a state of not generating power.

## Description

### TECHNICAL FIELD

This application relates to the field of vehicle technologies, and in particular, to a control method and a control apparatus.

### BACKGROUND

A new energy vehicle may include a motor and an engine. In a scenario in which a temperature inside the vehicle is low, the vehicle may supply power to a thermistor by using a battery, so that heat generated by the thermistor is used to heat a passenger compartment. However, this heating mode has a slow heating speed.

To improve a speed at which the vehicle heats the passenger compartment, the vehicle starts the engine and heats the passenger compartment by using heat generated when the engine works.

However, heating the passenger compartment by using the heat generated when the engine works may cause the battery in the vehicle to be overcharged and damage the battery.

Therefore, a control method that can ensure both battery safety and a heating speed is urgently needed.

### SUMMARY

This application provides a control method and a control apparatus, to ensure both battery safety and a heating speed of a passenger compartment.

According to a first aspect, a control method is provided. The method may include: obtaining a heating request for a passenger compartment of a vehicle; starting an engine of the vehicle based on the heating request; heating the passenger compartment by using heat generated by the engine; and if a state of charge of a battery of the vehicle is greater than or equal to a preset state of charge, and a charging power of the battery is greater than or equal to a preset charging power, controlling the engine to idle and controlling a generator to be in a state of not generating power.

That the vehicle obtains the heating request for the passenger compartment means that the vehicle detects (or obtains) an air conditioner heat generation request, or that the vehicle detects (or obtains) an operation of turning on the air conditioner for heat generation by a user. This is not limited in this application.

The preset state of charge may be a high state of charge, for example, 70%, 80%, 90%, or 95%. The preset charging power indicates a maximum charging power allowed by a battery pack. There is a one-to-one correspondence between the preset charging power and the preset state of charge. The preset charging power may vary with the preset state of charge. A larger preset state of charge indicates a smaller preset charging power.

When the engine works, the engine can drive the generator to generate power or not to generate power. Specifically, when the engine idles, a voltage of the generator is small, a current generated by the battery pack and a current generated by the generator may offset each other, and the generator does not generate power. When the engine does not idle, the generator charges the battery pack. The engine and the generator are mechanically connected, and the engine drives the generator to rotate through the mechanical connection. When the generator does not generate resistance, the engine idles.

It should be noted that the battery pack is merely a representation form or a representation mode of the battery, and the battery may alternatively be in another form. For example, the battery is integrated into a chassis of the vehicle, or the battery is integrated into a body. This is not limited in embodiments of this application.

When the state of charge of the battery is greater than or equal to the preset state of charge, if the charging power of the battery is greater than or equal to the preset charging power, which may indicate that the battery is in a state in which charging is not allowed, the vehicle controls the engine to idle and heats the engine quickly. To be specific, there is no torque load (except for overcoming cylinder stroke resistance of the engine). In this case, the generator does not charge the battery. That the vehicle controls the engine to idle may mean that the engine is in a warm-up mode. The warm-up mode is merely an example of a name. This is not limited in this application.

According to the control method provided in this application, when the battery is in a high state of charge, the engine may be started, and the engine drives the generator to charge the battery. When the charging power of the battery reaches the preset charging power, the engine is controlled to idle, and the engine still generates heat, but the generator does not charge the battery. This can ensure battery safety and a heating speed of the passenger compartment, so as to improve comfort of the passenger compartment.

With reference to the first aspect, in some implementations of the first aspect, the method further includes: if the state of charge of the battery is greater than or equal to the preset state of charge, and the charging power of the battery is less than the preset charging power, controlling the engine to drive the generator to charge the battery.

When the state of charge of the battery is greater than or equal to the preset state of charge, if the charging power of the battery is less than the preset charging power, which may indicate that the battery is in a state in which charging is allowed, the vehicle controls the engine to drive the generator to charge the battery. In this case, noise is small. This may be referred to that the engine is in a silent power generation mode. The silent power generation mode is merely an example of a name. This is not limited in this application.

According to the control method provided in embodiments of this application, when the battery is in the high state of charge and charging is allowed, the engine may drive the generator to charge the battery, and the heat generated when the engine works may be used to heat the passenger compartment. This can ensure the battery safety and the heating speed of the passenger compartment, so as to improve the comfort of the passenger compartment. In addition, the noise of the engine is small. This can improve noise, vibration, and harshness (noise, vibration, and harshness, NVH) performance of the vehicle.

With reference to the first aspect, in some implementations of the first aspect, the controlling the engine to drive the generator to charge the battery includes: determining a generation power of the generator as an allowed maximum generation power; and charging the battery by using the generator.

When the state of charge of the battery is greater than or equal to the preset state of charge, and the charging power of the battery is less than the preset charging power, a larger generation power indicates more heat generated by the engine, a faster water temperature rise, more heat transmitted to a warm air core, and a faster heating speed of the passenger compartment. Therefore, to increase the heating speed of the passenger compartment, the vehicle may determine the generation power of the generator as the allowed maximum generation power. It should be understood that there is a power range for the generation power, and the power range includes a minimum generation power and a maximum generation power. To increase the heating speed of the passenger compartment, the generation power of the generator may be determined as the maximum generation power.

According to the control method provided in this application, when the state of charge of the battery is greater than or equal to the preset state of charge, and the charging power of the battery is less than the preset charging power, the generation power of the generator is determined as the allowed maximum generation power, so that the heat generated by the engine can be maximized, and the heating speed of the passenger compartment can be improved.

With reference to the first aspect, in some implementations of the first aspect, a heating request message includes a target temperature. The controlling the engine to drive the generator to charge the battery includes: obtaining a generation power of the generator based on the target temperature and a correspondence, where the correspondence includes a correspondence between a plurality of temperatures and a plurality of generation powers; and charging the battery by using the generator.

The target temperature is a temperature to be implemented by the air conditioner through heat generation, for example, 25°C or 27°C.

The correspondence between the temperatures and the generation powers may be a one-to-one correspondence, or may be a many-to-one correspondence. This is not limited in embodiments of this application.

A higher target temperature indicates a larger generation power, more heat generated by a motor, and a faster heating speed. The heating speed varies with the target temperature.

According to the control method provided in this application, the generation power of the generator can be adjusted based on the target temperature. This can ensure that the heating speed is increased and the heating speed is controlled.

With reference to the first aspect, in some implementations of the first aspect, the method further includes: when it is detected that the battery is being charged, obtaining a passenger compartment temperature, and recording charging duration of the battery; and when at least one of the following conditions is met, stopping controlling the engine to drive the generator to charge the battery: The charging duration is greater than or equal to preset charging duration; and the passenger compartment temperature is greater than or equal to a preset temperature.

It is detected that the battery is being charged, that is, the engine is in an on state and is in the silent power generation mode. This application further provides a condition for exiting the silent power generation mode. When detecting that the passenger compartment temperature or the charging duration of the battery meets at least one of the following conditions: The passenger compartment temperature is greater than or equal to the preset temperature; and the charging duration is greater than or equal to the preset charging duration, the vehicle exits the silent power generation mode, that is, stops controlling the engine to drive the generator to charge the battery.

The preset temperature may be the same as the target temperature in the heating request message, or may be less than the target temperature. This is not limited in this application. When the preset temperature is less than the preset temperature, the vehicle may stop controlling the engine to drive the generator to charge the battery.

When the charging duration is greater than or equal to the preset charging duration, and the preset temperature is less than the preset temperature, the vehicle may stop controlling the engine to drive the generator to charge the battery.

According to the control method provided in this application, when the passenger compartment temperature is greater than or equal to the preset temperature, and/or the charging duration is greater than or equal to the preset charging duration, stopping controlling the engine to drive the generator to charge the battery enables the engine to work for a short time, or work at a low power. This can reduce fuel consumption.

With reference to the first aspect, in some implementations of the first aspect, the starting an engine of the vehicle based on the heating request includes: obtaining a status of a thermistor based on the heating request, where the status of the thermistor includes a normal state or a faulty state, and the thermistor is configured to heat the passenger compartment; and starting the engine if the thermistor is in the faulty state.

The heating request may be referred to as a start condition for starting the engine, and the start condition is a prerequisite for starting the engine. If the prerequisite is not met, the vehicle does not start the engine.

That the thermistor is in the faulty state may be referred to as a trigger condition for starting the engine. When detecting that the engine meets the start condition and the trigger condition, the vehicle starts the engine.

When the thermistor is faulty, heat cannot be generated. To meet the heating request, the engine is started, so that the heat generated when the engine works is used to heat the passenger compartment.

According to the control method provided in this application, when the thermistor is in the faulty state, the engine is started, and the heat generated when the engine works is used to heat the passenger compartment. This helps meet the heating request.

With reference to the first aspect, in some implementations of the first aspect, the starting an engine of the vehicle based on the heating request includes: obtaining a status of a water pump based on the heating request, where the status of the water pump includes a normal state or a faulty state, the water pump is configured to transmit heat of a thermistor, and the thermistor is configured to heat the passenger compartment; and starting the engine if the water pump is in the faulty state.

The heating request may be referred to as a start condition for starting the engine. That the water pump is in the faulty state may be referred to as a trigger condition for starting the engine. When detecting that the engine meets the start condition and the trigger condition, the vehicle starts the engine.

When the water pump is faulty, the heat generated by the thermistor cannot be transmitted. To meet the heating request, the engine is started, so that the heat generated when the engine works is used to heat the passenger compartment.

According to the control method provided in this application, when the water pump is in the faulty state, the engine is started, and the heat generated when the engine works is used to heat the passenger compartment. This helps meet the heating request.

With reference to the first aspect, in some implementations of the first aspect, the starting an engine of the vehicle based on the heating request includes: obtaining a status of a heat pump based on the heating request, where the status of the heat pump includes a normal state or a faulty state, and the heat pump is configured to heat the passenger compartment; and starting the engine if the heat pump is in the faulty state.

The heating request may be referred to as a start condition for starting the engine. That the heat pump is in the faulty state may be referred to as a trigger condition for starting the engine. When detecting that the engine meets the start condition and the trigger condition, the vehicle starts the engine.

When the heat pump is faulty, the passenger compartment cannot be heated. To meet the heating request, the engine is started, so that the heat generated when the engine works is used to heat the passenger compartment.

According to the control method provided in this application, when the heat pump is in the faulty state, the engine is started, and the heat generated when the engine works is used to heat the passenger compartment. This helps meet the heating request.

With reference to the first aspect, in some implementations of the first aspect, the starting an engine of the vehicle based on the heating request includes: obtaining a status of an electrical machine based on the heating request, where the status of the electrical machine includes at least one of the following: a motor state, a blocked state, and a generator state, and the electrical machine is configured to supply power to the vehicle; and starting the engine if the electrical machine is in the motor state or in the generator state.

The heating request may be referred to as a start condition for starting the engine. When the electrical machine is in the blocked state, the electrical machine heats up, and may heat the passenger compartment. When the electrical machine is in the motor state or in the generator state, the electrical machine cannot heat the passenger compartment.

That the electrical machine is in the motor state or in the generator state may be referred to as a trigger condition for starting the engine. When detecting that the engine meets the start condition and the trigger condition, the vehicle starts the engine.

When the electrical machine is in the motor state or in the generator state, the passenger compartment cannot be heated. To meet the heating request, the engine is started, so that the heat generated when the engine works is used to heat the passenger compartment.

According to the control method provided in this application, when the electrical machine is in the motor state or in the generator state, the engine is started, and the heat generated when the engine works is used to heat the passenger compartment. This helps meet the heating request.

With reference to the first aspect, in some implementations of the first aspect, the starting an engine of the vehicle based on the heating request includes: obtaining a status of a compressor system of the air conditioner of the vehicle based on the heating request, where the status of the compressor system includes a normal state or a faulty state, and the compressor system is configured to heat the passenger compartment; and starting the engine if the compressor system is in the faulty state.

The compressor system may heat the passenger compartment by using physical-state-change heat dissipation. For example, the compressor system may dissipate heat by changing the refrigerant from a gas state to a liquid state to heat the passenger compartment. However, embodiments of this application are not limited thereto.

If the compressor system is in the faulty state, it may indicate that the compressor system cannot heat the passenger compartment by using the physical-state-change heat dissipation, or that heat obtained based on a physical state change is little and is insufficient to meet the heating request, and the vehicle may start the engine to heat the passenger compartment, so as to increase the heating speed.

Optionally, if the compressor system may dissipate heat by changing the refrigerant from the gas state to the liquid state to heat the passenger compartment, the vehicle may further obtain a capacity of the refrigerant. When the capacity of the refrigerant is less than a preset capacity, the refrigerant cannot heat the passenger compartment or the heating speed is slow, and the vehicle may start the engine to heat the passenger compartment, so as to increase the heating speed. The preset capacity may be data calibrated based on a vehicle model and a function of the vehicle in this application. However, embodiments of this application are not limited thereto.

According to the control method provided in this application, when the compressor system is in the faulty state, the engine is started, and the heat generated when the engine works is used to heat the passenger compartment. This helps meet the heating request.

With reference to the first aspect, in some implementations of the first aspect, the heating request includes a target temperature. The method further includes: stopping the engine when at least one of the following conditions is met and the passenger compartment temperature is greater than or equal to the target temperature: the thermistor is in the normal state, the water pump is in the normal state, the heat pump is in the normal state, the electrical machine is in the blocked state, or the compressor system is in the normal state. The thermistor is configured to heat the passenger compartment, the water pump is configured to transmit the heat of the thermistor, the heat pump is configured to heat the passenger compartment, the electrical machine is configured to supply power to the vehicle, and the compressor system is configured to heat the passenger compartment.

If the start condition for starting the engine is the heating request, and the trigger condition for starting the engine is that the thermistor is in the faulty state, a condition for stopping the engine may be that the thermistor is in the normal state, and the passenger compartment temperature is greater than or equal to the target temperature. If the start condition for starting the engine is the heating request, and the trigger condition for starting the engine is that the water pump is in the faulty state, the condition for stopping the engine may be that the water pump is in the normal state, and the passenger compartment temperature is greater than or equal to the target temperature. If the start condition for starting the engine is the heating request, and the trigger condition for starting the engine is that the heat pump is in the faulty state, the condition for stopping the engine may be that the heat pump is in the normal state, and the passenger compartment temperature is greater than or equal to the target temperature. If the start condition for starting the engine is the heating request, and the trigger condition for starting the engine is that the electrical machine is in the engine state or in the generator state, the condition for stopping the engine may be that the electrical machine is in the blocked state, and the passenger compartment temperature is greater than or equal to the target temperature. If the start condition for starting the engine is the heating request, and the trigger condition for starting the engine is that the compressor system is in the faulty state, the condition for stopping the engine may be that the compressor system is in the normal state, and the passenger compartment temperature is greater than or equal to the target temperature.

According to the control method provided in embodiments of this application, the condition for stopping the engine is specified, and the engine may stop in a timely manner. This facilitates stable running and improves stability of the vehicle.

With reference to the first aspect, in some implementations of the first aspect, the starting an engine of the vehicle based on the heating request includes: obtaining a status of the engine based on the heating request, where the status of the engine includes an on state or an off state; and starting the engine if the engine is in the off state.

The vehicle may obtain the status of the engine based on the heating request, and determine whether the engine is in the on state. If the engine is in the off state, the engine is started. If the engine is in the on state, a working state of the engine is determined based on the state of charge of the battery.

According to the control method provided in this application, before the engine is started, it is determined whether the engine is in the on state, and if the engine is not started, the engine is started. This avoids repeated starting of the engine when the engine is started, which affects running of a vehicle.

With reference to the first aspect, in some implementations of the first aspect, the method further includes: outputting prompt information after the engine is in the on state, where the prompt information is used to inform the user that the engine is started based on the heating request.

After starting the engine, the vehicle detects that the engine is in the on state, and may send the prompt information to a display. The prompt information is used to inform the user that the engine is started based on the heating request. The prompt information may be "the engine is started based on an air conditioner requirement". However, embodiments of this application are not limited thereto. The display may also be referred to as a meter. This is not limited in embodiments of this application.

According to the control method provided in this application, after the engine is started, the prompt information is used to inform the user that the engine is started based on the heating request, and the user is notified of a status of the vehicle, so that the user knows a running state of the vehicle.

With reference to the first aspect, in some implementations of the first aspect, the method further includes: maintaining the on state of the engine if the engine is in the on state; and outputting the prompt information when there is no request for starting the engine other than the heating request, where the prompt information is used to inform the user that the engine is started based on the heating request.

If the engine is in the on state, the on state of the engine is maintained, and the working state of the engine may be determined based on the state of charge of the battery. When there is no request for starting the engine other than the heating request, the engine does not stop rotating because the heating request exists. The prompt information may be output, and the prompt information is used to inform the user that the engine is started based on the heating request. The prompt information may be "the engine is started based on an air conditioner requirement". However, this application is not limited thereto.

According to the control method provided in this application, when the engine has been started, an air conditioner heat generation request is detected, and an engine starting condition is met. When a previous engine starting requirement does not exist, the prompt information is used to inform the user that the engine is started based on the air conditioner heat generation request, and the user is notified of the status of the vehicle, so that the user knows the running state of the vehicle.

According to a second aspect, a control apparatus is provided, including an obtaining module and a processing module. The obtaining module is configured to: obtain a heating request for a passenger compartment of a vehicle. The processing module is configured to: start an engine of the vehicle based on the heating request; heat the passenger compartment by using heat generated by the engine; and if a state of charge of a battery of the vehicle is greater than or equal to a preset state of charge, and a charging power of the battery is greater than or equal to a preset charging power, control the engine to idle and control a generator to be in a state of not generating power.

With reference to the second aspect, in some implementations of the second aspect, the processing module is further configured to: if the state of charge of the battery is greater than or equal to the preset state of charge, and the charging power of the battery is less than the preset charging power, control the engine to drive the generator to charge the battery.

With reference to the second aspect, in some implementations of the second aspect, the processing module is further configured to: determine a generation power of the generator as an allowed maximum generation power; and charge the battery by using the generator.

With reference to the second aspect, in some implementations of the second aspect, the heating request includes a target temperature. The obtaining module 810 is further configured to: obtain a generation power of the generator based on the target temperature and a correspondence, where the correspondence includes a correspondence between a plurality of temperatures and a plurality of generation powers. The processing module is further configured to: charge the battery by using the generator.

With reference to the second aspect, in some implementations of the second aspect, the obtaining module is further configured to: when it is detected that the battery is charged, obtain a passenger compartment temperature, and record charging duration of the battery. The processing module is further configured to: when at least one of the following conditions is met, stop controlling the engine to drive the generator to charge the battery: The charging duration is greater than or equal to preset charging duration; and the passenger compartment temperature is greater than or equal to a preset temperature.

With reference to the second aspect, in some implementations of the second aspect, the obtaining module is further configured to: obtain a status of a thermistor based on the heating request, where the status of the thermistor includes a normal state or a faulty state, and the thermistor is configured to heat the passenger compartment. The processing module is further configured to: start the engine if the thermistor is in the faulty state.

With reference to the second aspect, in some implementations of the second aspect, the obtaining module is further configured to: obtain a status of a water pump based on the heating request, where the status of the water pump includes a normal state or a faulty state, the water pump is configured to transmit heat of a thermistor, and the thermistor is configured to heat the passenger compartment. The processing module is further configured to: start the engine if the water pump is in the faulty state.

With reference to the second aspect, in some implementations of the second aspect, the obtaining module is further configured to: obtain a status of a heat pump based on the heating request, where the status of the heat pump includes a normal state or a faulty state, and the heat pump is configured to heat the passenger compartment. The processing module 820 is further configured to: start the engine if the heat pump is in the faulty state.

With reference to the second aspect, in some implementations of the second aspect, the obtaining module is further configured to: obtain a status of an electrical machine based on the heating request, where the status of the electrical machine includes at least one of the following: a motor state, a blocked state, and a generator state, and the electrical machine is configured to supply power to the vehicle. The processing module is further configured to: start the engine if the electrical machine is in the motor state or in the generator state.

With reference to the second aspect, in some implementations of the second aspect, the obtaining module is further configured to: obtain a status of a compressor system of an air conditioner of the vehicle based on the heating request, where the status of the compressor system is a normal state or a faulty state, and the compressor system is configured to heat the passenger compartment. The processing module is further configured to: start the engine if the compressor system is in the faulty state.

With reference to the second aspect, in some implementations of the second aspect, the heating request includes a target temperature. The processing module is further configured to: stop the engine when at least one of the following conditions is met and the passenger compartment temperature is greater than or equal to the target temperature: the thermistor is in the normal state, the water pump is in the normal state, the heat pump is in the normal state, the electrical machine is in the blocked state, or the compressor system of the air conditioner of the vehicle is in the normal state. The thermistor is configured to heat the passenger compartment, the water pump is configured to transmit the heat of the thermistor, the heat pump is configured to heat the passenger compartment, the electrical machine is configured to supply power to the vehicle, and the compressor system is configured to heat the passenger compartment.

With reference to the second aspect, in some implementations of the second aspect, the obtaining module is further configured to: obtain a status of the engine based on the heating request, where the status of the engine includes an on state or an off state. The processing module is further configured to: start the engine if the engine is in the off state.

With reference to the second aspect, in some implementations of the second aspect, the processing module is further configured to: output prompt information after the engine is in the on state, where the prompt information is used to inform a user that the engine is started based on the heating request.

With reference to the second aspect, in some implementations of the second aspect, the processing module is further configured to: maintain the on state of the engine if the engine is in the on state; and output the prompt information when there is no request for starting the engine other than the heating request, where the prompt information is used to inform the user that the engine is started based on the heating request.

According to a third aspect, a vehicle is provided, which may also be referred to as a control apparatus. The control apparatus includes a processor and a memory. The memory is configured to store a computer program, and the processor is configured to invoke the computer program from the memory and run the computer program, so that the apparatus performs the method in any possible implementation of the first aspect.

Optionally, there are one or more processors, and there are one or more memories.

Optionally, the memory may be integrated with the processor, or the memory and the processor are separately disposed.

Optionally, the vehicle further includes a transmitter machine (transmitter) and a receiver machine (receiver). The transmitter machine and the receiver machine may be separately disposed, or may be integrated together to obtain a transceiver machine (transceiver).

According to a fourth aspect, this application provides a processor, including an input circuit, an output circuit, and a processing circuit. The processing circuit is configured to: receive a signal by using the input circuit, and transmit the signal by using the output circuit, so that the processor performs the method in any possible implementation of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fifth aspect, a computer-readable storage medium is provided. The computer-readable storage medium stores a computer program (which may also be referred to as code or instructions). When the computer program is run on a computer, the computer is enabled to perform the method in any possible implementation of the first aspect.

According to a sixth aspect, a computer program product is provided. The computer program product includes a computer program (which may also be referred to as code or instructions). When the computer program is run, a computer is enabled to perform the method in any possible implementation of the first aspect.

### BRIEF DESCRIPTION OF DRAWINGS

FIG. 1 is a diagram of a system architecture of a vehicle;
FIG. 2 is a schematic flowchart of an engine control method;
FIG. 3 is a schematic flowchart of a control method according to an embodiment of this application;
FIG. 4 is a schematic flowchart of another control method according to an embodiment of this application;
FIG. 5 is a schematic flowchart of a method for exiting a silent power generation mode according to an embodiment of this application;
FIG. 6 is a schematic flowchart of an engine starting method according to an embodiment of this application;
FIG. 7 is a schematic flowchart of a prompt information display method according to an embodiment of this application;
FIG. 8 is a block diagram of a control apparatus according to an embodiment of this application; and
FIG. 9 is a block diagram of another control apparatus according to an embodiment of this application.

### DESCRIPTION OF EMBODIMENTS

The following describes technical solutions of this application with reference to accompanying drawings.

As the country vigorously promotes the development of the new energy field and the popularization of new energy vehicles, new energy vehicles may be of energy types such as an extended-range type, a hybrid type, and a pure electric type. In a possible case, a new energy vehicle may include a motor and an engine. When a temperature in winter is extremely low, a passenger in the vehicle may turn on an air conditioner in the vehicle to increase a passenger compartment temperature. In a pure electric mode, a battery pack supplies power to a thermistor, and heat generated by the thermistor is used to heat a passenger compartment. However, a heating speed is slow and a target temperature cannot be reached, resulting in a poor heating effect.

At present, the vehicle may heat the passenger compartment in an engine-assisted heating manner. The vehicle may heat the passenger compartment by using heat generated by the engine and the heat generated by the thermistor, to increase the heating speed. However, the engine drives a generator to charge the battery pack. When a state of charge of the battery pack is sufficient, the battery pack is overcharged in the engine-assisted heating manner, and the battery pack is damaged.

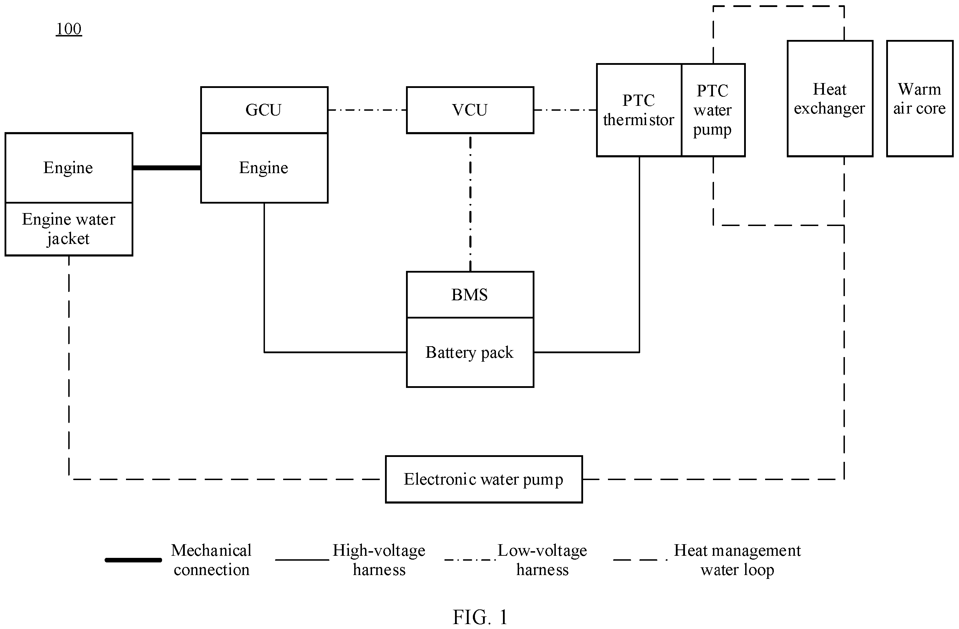

For example, FIG. 1 shows a diagram of a system architecture of vehicle 100. As shown in FIG. 1, the vehicle 100 includes an engine, an engine water jacket, a generator control unit (generator control unit, GCU), a generator, a vehicle control unit (vehicle control unit, VCU), a battery management system (battery management system, BMS), a battery pack, an electronic water pump, a positive temperature coefficient (positive temperature coefficient, PTC) thermistor, a PTC water pump, a heat exchanger, and a warm air core. The engine and the generator are mechanically connected. The VCU is connected to the GCU, the BMS, and the PTC thermistor through low-voltage harnesses. The battery pack is connected to the generator and the PTC thermistor through high-voltage harnesses. The engine, the engine water jacket, the electronic water pump, the PTC water pump, and the heat exchanger form a heat management water loop. It should be noted that a high-voltage connection, a low-voltage connection, the heat management water loop, and a mechanical connection are merely diagrams, are only for ease of understanding the solutions, and do not represent a real state of a product.

When detecting an operation of turning on an air conditioner for heat generation by a user, in response to the operation, the VCU of the vehicle 100 indicates the BMS to supply power to the PTC thermistor by using the battery pack, and transmits heat generated by the PTC thermistor to the heat exchanger by using the PTC water pump, to heat the warm air core, so as to increase a passenger compartment temperature. In this method, a heating speed is slow due to a limitation of a heating power of the PTC thermistor. If an ambient temperature is extremely low in winter, and the heat of the PTC thermistor is used to heat a passenger compartment, an expected temperature cannot be reached.

When a temperature in winter is extremely low, the VCU of the vehicle 100 starts the engine, and transmits, to the heat exchanger by using the electronic water pump, heat generated by the engine, to heat the warm air core, so as to improve a heating speed of the passenger compartment.

However, the engine indicates the GCU to control the generator to charge the battery pack. When a state of charge of the battery pack is sufficient, for example, the state of charge of the battery pack is greater than 70%, charging the battery pack by using the generator may cause overcharge of the battery pack, and further damage the battery pack. Therefore, before starting the engine, the vehicle 100 determines whether the state of charge of the battery pack is a high state of charge, and starts the engine when the state of charge is not the high state of charge, or does not start the engine when the state of charge is the high state of charge.

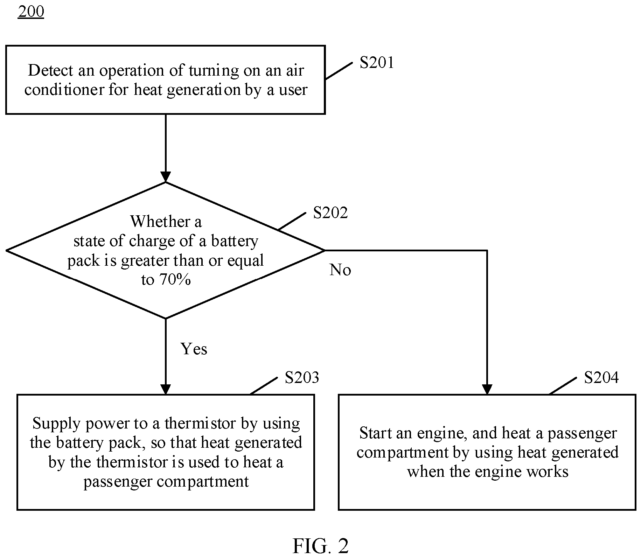

For example, FIG. 2 is a schematic flowchart of an engine control method 200. As shown in FIG. 2, the control method 200 includes the following steps:
S201: Detect an operation of turning on an air conditioner for heat generation by a user.
S202: In response to the operation, determine whether a state of charge (state of charge, SOC) of a battery pack is greater than or equal to 70%.
S203: If the state of charge of the battery pack is greater than or equal to 70%, supply power to a thermistor by using the battery pack, so that heat generated by the thermistor is used to heat a passenger compartment.
S204: If the state of charge of the battery pack is less than 70%, start an engine, and heat the passenger compartment by using heat generated when the engine works.

In this implementation, when the state of charge of the battery pack is greater than or equal to 70%, only the heat generated by the thermistor is used to heat the passenger compartment, and a heating speed is slow. In other words, starting of the engine is affected by the state of charge of the battery pack. This is not applicable to all scenarios, and cannot implement all-scenario coverage.

In view of this, embodiments of this application provide a control method and a control apparatus, to ensure safety of a battery pack and a heating speed of a passenger compartment. It should be noted that the method provided in embodiments of this application may be applied to any vehicle including an engine and a generator, which is not limited to vehicles of energy types such as an extended-range type, a hybrid type, and a pure electric type. The method provided in embodiments of this application may be further applied to another transport tool like a ship or an airplane, or another device like a robot. This is not limited in embodiments of this application.

To better understand embodiments of this application, the following descriptions are first provided in embodiments of this application.

First, the term "and/or" in embodiments of this application describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

Second, in embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

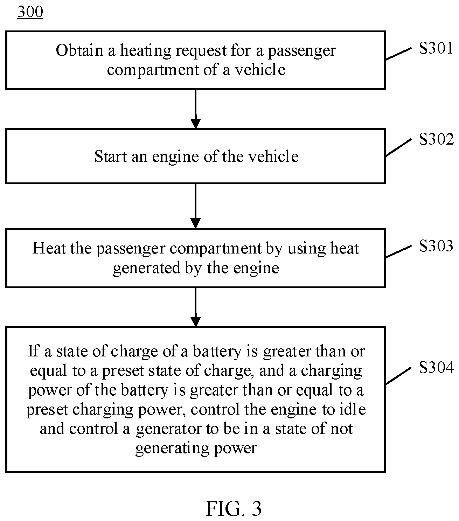

FIG. 3 is a schematic flowchart of a control method 300 according to an embodiment of this application. As shown in FIG. 3, the method may be performed by a vehicle, for example, the vehicle 100 shown in FIG. 1.

The method 300 may include the following steps.

S301: Obtain a heating request for a passenger compartment of a vehicle.

That the vehicle obtains the heating request for the passenger compartment means that the vehicle obtains an air conditioner heat generation request, or the vehicle obtains an operation of turning on an air conditioner for heat generation by a user. This is not limited in embodiments of this application.

S302: Start an engine of the vehicle based on the heating request.

The vehicle starts the engine of the vehicle based on the heating request, and uses the engine to drive a generator to charge a battery.

S303: Heat the passenger compartment by using heat generated by the engine.

Heating the passenger compartment by using the heat generated by the engine may also mean heating the passenger compartment by using residual heat of the engine. This is not limited in embodiments of this application.

S304: If a state of charge of the battery is greater than or equal to a preset state of charge, and a charging power of the battery is greater than or equal to a preset charging power, control the engine to idle and control the generator to be in a state of not generating power.

The preset state of charge may be a high state of charge, for example, 70%, 80%, 90%, or 95%. The preset charging power indicates a maximum charging power allowed by the battery. There is a one-to-one correspondence between the preset charging power and the preset state of charge. The preset charging power may vary with the preset state of charge. A larger preset state of charge indicates a smaller preset charging power.

For example, when the preset state of charge is 80%, the preset charging power may be 6000 Watts; when the preset state of charge is 90%, the preset charging power may be 4000 Watts; and when the preset state of charge is 95%, the preset charging power may be 3000 Watts.

When the engine works, the engine can drive the generator to generate power or not to generate power. Specifically, when the engine idles, a voltage of the generator is small, a current generated by the battery and a current generated by the generator may offset each other, and the generator does not generate power. When the engine does not idle, the generator charges the battery. The engine and the generator are mechanically connected, and the engine drives the generator to rotate through the mechanical connection. When the generator does not generate resistance, the engine idles.

When the state of charge of the battery is greater than or equal to the preset state of charge, if the charging power of the battery is greater than or equal to the preset charging power, which may indicate that the battery is in a state in which charging is not allowed, the vehicle controls the engine to idle and heats the engine quickly. To be specific, there is no torque load (except for overcoming cylinder stroke resistance of the engine). In this case, the generator does not charge the battery. That the vehicle controls the engine to idle may mean that the engine is in a warm-up mode. The warm-up mode is merely an example of a name. This is not limited in embodiments of this application.

When the engine idles and does not generate power, a rotational speed of the engine may be preset (or calibrated) by a developer before the vehicle is delivered. In this case, generator excitation is only used to offset a counter-electromotive force.

It should be noted that, if the method 300 provided in this embodiment of this application is applied to the architecture shown in FIG. 1, the method 300 may be stored in a flash memory of a VCU, collects data of a signal of each sensor controller, performs computation and decision-making on the data, generates instructions, and sends the instructions to an executor like an EMS, a GCU, a PTC, and a BMS.

The method 300 provided in this embodiment of this application may be further applied to a dual-mode (Dual-Mode) hybrid vehicle. The dual-mode hybrid vehicle may enable an engine to directly drive the vehicle, and may disconnect a generator. When detecting an air conditioner heat generation request, the dual-mode hybrid vehicle may directly start engine direct drive at a high SOC and heat a passenger compartment by using heat of the engine.

According to the control method provided in embodiments of this application, when the battery is in a high state of charge, the engine may be started, and the engine drives the generator to charge the battery. When the charging power of the battery reaches the preset charging power, the engine is controlled to idle, and the engine still generates heat, but the generator does not charge the battery. This can ensure battery safety and a heating speed of the passenger compartment, so as to improve comfort of the passenger compartment.

In an optional embodiment, if the state of charge of the battery is greater than or equal to the preset state of charge, and the charging power of the battery is less than the preset charging power, the engine is controlled to drive the generator to charge the battery.

When the state of charge of the battery is greater than or equal to the preset state of charge, if the charging power of the battery is less than the preset charging power, which may indicate that the battery is in a state in which charging is allowed, the vehicle controls the engine to drive the generator to charge the battery. In this case, noise is small. This may be referred to as that the engine is in a silent power generation mode. The silent power generation mode is merely an example of a name. This is not limited in embodiments of this application.

It should be noted that, as duration of charging the battery by the generator increases, the state of charge of the battery increases, and the preset charging power decreases. When the charging power of the battery is greater than or equal to the preset charging power, the vehicle controls the engine to idle.

According to the control method provided in embodiments of this application, when the battery is in the high state of charge and charging is allowed, the engine may drive the generator to charge the battery, and the heat generated when the engine works may be used to heat the passenger compartment. This can ensure the battery safety and the heating speed of the passenger compartment, so as to improve the comfort of the passenger compartment. In addition, the noise of the engine is small. This can improve noise, vibration, and harshness (noise, vibration, and harshness, NVH) performance of the vehicle.

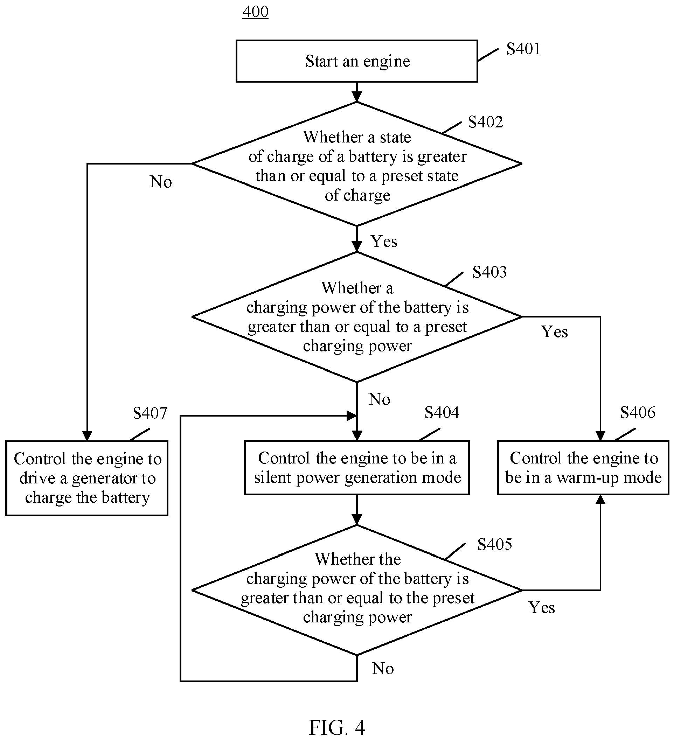

For example, FIG. 4 is a schematic flowchart of a control method 400. As shown in FIG. 4, the method 400 may include the following steps.

S401: Start an engine.

S402: Determine whether a state of charge of a battery is greater than or equal to a preset state of charge.

S403: If the state of charge of the battery is greater than or equal to the preset state of charge, determine whether a charging power of the battery is greater than or equal to a preset charging power.

S404: If the charging power of the battery is greater than or equal to the preset charging power, control the engine to be in a silent power generation mode, that is, control the engine to drive a generator to charge the battery.

S405: As the state of charge of the battery increases and the preset charging power becomes smaller, re-determine whether the charging power of the battery is greater than or equal to the preset charging power.

If the charging power of the battery is greater than or equal to the preset charging power, the engine is controlled to idle, that is, the engine is controlled to be in a warm-up mode, and S406 is performed. If the charging power of the battery is less than the preset charging power, the engine is controlled to be in the silent power generation mode, that is, the engine is controlled to drive the generator to charge the battery, and S404 is performed.

S406: If the charging power of the battery is less than the preset charging power, control the engine to be in the warm-up mode, that is, control the engine to idle.

S407: If the state of charge of the battery is less than the preset state of charge, control the engine to drive the generator to charge the battery.

When the state of charge of the battery is less than the preset state of charge, if a starting condition of the engine is met, a vehicle may also control the engine to drive the generator to charge the battery, and heat a passenger compartment by using heat generated by the engine.

According to the control method provided in embodiments of this application, when the state of charge of the battery is greater than or equal to the preset state of charge, the engine may be controlled to work. Alternatively, when the state of charge of the battery is less than the preset state of charge, the engine may be controlled to work. Working of the engine is not affected by the state of charge of the battery. This is applicable to any scenario, and can implement all-scenario coverage. In addition, when the state of charge of the battery is greater than or equal to the preset state of charge, the engine may be in different working modes based on the charging power of the battery, so that different heat generation requirements can be met while battery safety is ensured.

In an optional embodiment, the controlling the engine to drive the generator to charge the battery when the state of charge of the battery is greater than or equal to the preset state of charge and the charging power of the battery is less than the preset charging power may include: determining a generation power of the generator as an allowed maximum generation power, and charging the battery by using the generator.

When the state of charge of the battery is greater than or equal to the preset state of charge, and the charging power of the battery is less than the preset charging power, a larger generation power indicates more heat generated by the engine, a faster water temperature rise, more heat transmitted to a warm air core, and a faster heating speed of the passenger compartment. Therefore, to increase the heating speed of the passenger compartment, the vehicle may determine the generation power of the generator as the allowed maximum generation power. It should be understood that there is a power range for the generation power, and the power range includes a minimum generation power and a maximum generation power. To increase the heating speed of the passenger compartment, the generation power of the generator may be determined as the maximum generation power.

It should be noted that the power range of the generation power may be a power range of the generator specified before delivery, or may be a range calibrated through an experiment in this application. This is not limited in embodiments of this application.

For example, if the generator generates power at 5000 watts, it takes only 8 minutes to 9 minutes to raise a water temperature by 70°C.

According to the control method provided in embodiments of this application, when the state of charge of the battery is greater than or equal to the preset state of charge, and the charging power of the battery is less than the preset charging power, the generation power of the generator is determined as the allowed maximum generation power, so that the heat generated by the engine can be maximized, and the heating speed of the passenger compartment can be improved.

In an optional embodiment, the heating request includes a target temperature; and the controlling the engine to drive the generator to charge the battery when the state of charge of the battery is greater than or equal to the preset state of charge and the charging power of the battery is less than the preset charging power may include: obtaining the generation power of the generator based on the target temperature and a correspondence, where the correspondence includes a correspondence between a plurality of temperatures and a plurality of generation powers; and charging the battery by using the generator.

The target temperature is a temperature to be implemented by the air conditioner through heat generation, for example, 25°C or 27°C.

The correspondence between the temperatures and the generation powers may be a one-to-one correspondence, or may be a many-to-one correspondence. This is not limited in embodiments of this application.

For example, the correspondence between the temperatures and the generation powers is a many-to-one correspondence. When the temperature is 25°C, 26°C, or 27°C, the generation power may be 2000 watts.

It should be noted that a higher target temperature indicates a larger generation power, more heat generated by a motor, and a faster heating speed. The heating speed varies with the target temperature.

According to the control method provided in embodiments of this application, the generation power of the generator can be adjusted based on the target temperature. This can ensure that the heating speed is increased and the heating speed is controlled.

In an optional embodiment, the method 300 may further include: when it is detected that the battery is being charged, obtaining a passenger compartment temperature, and recording charging duration of the battery; and when at least one of the following conditions is met, stopping controlling the engine to drive the generator to charge the battery: The charging duration is greater than or equal to preset charging duration; and the passenger compartment temperature is greater than or equal to a preset temperature.

It is detected that the battery is being charged, that is, the engine is in an on state and is in the silent power generation mode. An embodiment of this application further provides a condition for exiting the silent power generation mode. When detecting that the passenger compartment temperature or the charging duration of the battery pack meets at least one of the following conditions: The passenger compartment temperature is greater than or equal to the preset temperature; and the charging duration is greater than or equal to the preset charging duration, the vehicle exits the silent power generation mode, that is, stops controlling the engine to drive the generator to charge the battery.

The preset charging duration may be 10 minutes or 15 minutes. However, embodiments of this application are not limited thereto. When the charging duration is greater than or equal to the preset charging duration, the vehicle may stop controlling the engine to drive the generator to charge the battery.

The preset temperature may be the same as the target temperature in the heating request, or may be less than the target temperature. This is not limited in embodiments of this application. When the preset temperature is less than the preset temperature, the vehicle may stop controlling the engine to drive the generator to charge the battery.

When the charging duration is greater than or equal to the preset charging duration, and the preset temperature is less than the preset temperature, the vehicle may stop controlling the engine to drive the generator to charge the battery.

There are two possible understandings of stopping controlling the engine to drive the generator to charge the battery. One possible understanding is that the engine is forcibly stopped. The other possible understanding is that the engine enters the warm-up mode, that is, the engine idles.

If the engine is forcibly stopped when the foregoing condition is met, even if the passenger compartment does not reach the target temperature in the heating request, a high temperature level is maintained, fuel consumption can be further reduced, and more energy is saved. If the vehicle obtains a heating request again, the foregoing method 300 may continue to be performed.

If the foregoing condition is met, the engine enters the warm-up mode, so that the battery can be protected. In addition, the passenger compartment may continue to be heated, and fuel consumption may also be reduced.

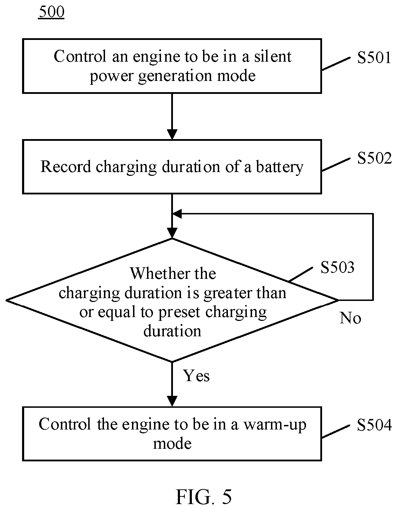

For example, FIG. 5 is a schematic flowchart of a method 500 for exiting a silent power generation mode. As shown in FIG. 5, the method 500 may include the following steps.

S501: Control an engine to be in the silent power generation mode.

S502: Record charging duration of a battery.

S503: Determine whether the charging duration is greater than or equal to preset charging duration.

If the charging duration is greater than or equal to the preset charging duration, a vehicle controls the engine to be in a warm-up mode, that is, S504 is performed. If the charging duration is less than the preset charging duration, whether the charging duration is greater than or equal to the preset charging duration continues to be determined, that is, S503 is performed.

S504: Control the engine to be in the warm-up mode.

According to the control method provided in embodiments of this application, when a passenger compartment temperature is greater than or equal to a preset temperature, and/or the charging duration is greater than or equal to the preset charging duration, stopping controlling the engine to drive a generator to charge the battery enables the engine to work for a short time, or work at a low power. This can reduce fuel consumption.

In an optional embodiment, the starting an engine of the vehicle based on the heating request in S302 may include: obtaining a status of a thermistor based on the heating request, where the status of the thermistor includes a normal state or a faulty state, and the thermistor is configured to heat the passenger compartment; and starting the engine if the thermistor is in the faulty state.

The thermistor may be the PTC thermistor shown in FIG. 1. However, embodiments of this application are not limited thereto.

The heating request may be referred to as a start condition for starting the engine, and the start condition is a prerequisite for starting the engine. If the prerequisite is not met, the vehicle does not start the engine. In addition to the heating request, the start condition for starting the engine may include that the engine and the generator do not have a fault in which the engine and the generator cannot be started. For a definition of the fault, refer to an existing fault list, for example, a fault like generator overheating or overcurrent. If the system architecture shown in FIG. 1 is used, the fault may further include a fault like an electronic water pump blocking or an EMS communication failure.

That the thermistor is in the faulty state may be referred to as a trigger condition for starting the engine. When detecting that the engine meets the start condition and the trigger condition, the vehicle starts the engine.

When the thermistor is faulty, heat cannot be generated. To meet the heating request, the engine is started, so that heat generated when the engine works is used to heat the passenger compartment.

According to the control method provided in embodiments of this application, when the thermistor is in the faulty state, the engine is started, and the heat generated when the engine works is used to heat the passenger compartment. This helps meet the heating request.

In an optional embodiment, the starting an engine of the vehicle based on the heating request in S302 includes: obtaining a status of a water pump based on the heating request, where the status of the water pump includes a normal state or a faulty state, the water pump is configured to transmit heat of a thermistor, and the thermistor is configured to heat the passenger compartment; and starting the engine if the water pump is in the faulty state.

The water pump may be the PTC water pump shown in FIG. 1. However, embodiments of this application are not limited thereto.

The heating request may be referred to as a start condition for starting the engine, and the start condition is a prerequisite for starting the engine. If the prerequisite is not met, the vehicle does not start the engine. That the water pump is in the faulty state may be referred to as a trigger condition for starting the engine. When detecting that the engine meets the start condition and the trigger condition, the vehicle starts the engine.

When the water pump is faulty, the heat generated by the thermistor cannot be transmitted. To meet the heating request, the engine is started, so that heat generated when the engine works is used to heat the passenger compartment.

According to the control method provided in embodiments of this application, when the water pump is in the faulty state, the engine is started, and the heat generated when the engine works is used to heat the passenger compartment. This helps meet the heating request.

In an optional embodiment, the starting an engine of the vehicle based on the heating request in S302 includes: obtaining a status of a heat pump based on the heating request, where the status of the heat pump includes a normal state or a faulty state, and the heat pump is configured to heat the passenger compartment; and starting the engine if the heat pump is in the faulty state.

The heating request may be referred to as a start condition for starting the engine, and the start condition is a prerequisite for starting the engine. If the prerequisite is not met, the vehicle does not start the engine. That the heat pump is in the faulty state may be referred to as a trigger condition for starting the engine. When detecting that the engine meets the start condition and the trigger condition, the vehicle starts the engine.

When the heat pump is faulty, the passenger compartment cannot be heated. To meet the heating request, the engine is started, so that heat generated when the engine works is used to heat the passenger compartment.

According to the control method provided in embodiments of this application, when the heat pump is in the faulty state, the engine is started, and the heat generated when the engine works is used to heat the passenger compartment. This helps meet the heating request.

In an optional embodiment, the starting an engine of the vehicle based on the heating request in S302 includes: obtaining a status of an electrical machine based on the heating request, where the status of the electrical machine includes at least one of the following: a motor state, a blocked state, and a generator state, and the electrical machine is configured to supply power to the vehicle; and starting the engine if the electrical machine is in the motor state or in the generator state.

The heating request may be referred to as a start condition for starting the engine, and the start condition is a prerequisite for starting the engine. If the prerequisite is not met, the vehicle does not start the engine. When the electrical machine is in the blocked state, the electrical machine heats up, and may heat the passenger compartment. When the electrical machine is in the motor state or in the generator state, the electrical machine cannot heat the passenger compartment.

That the electrical machine is in the motor state or in the generator state may be referred to as a trigger condition for starting the engine. When detecting that the engine meets the start condition and the trigger condition, the vehicle starts the engine.

When the electrical machine is in the motor state or in the generator state, the passenger compartment cannot be heated. To meet the heating request, the engine is started, so that heat generated when the engine works is used to heat the passenger compartment.

According to the control method provided in embodiments of this application, when the electrical machine is in the motor state or in the generator state, the engine is started, and the heat generated when the engine works is used to heat the passenger compartment. This helps meet the heating request.

In an optional embodiment, the starting an engine of the vehicle based on the heating request in S302 includes: obtaining a status of a compressor system of the air conditioner of the vehicle based on the heating request, where the status of the compressor system includes a normal state or a faulty state, and the compressor system is configured to heat the passenger compartment; and starting the engine if the compressor system is in the faulty state.

The compressor system may heat the passenger compartment by using physical-state-change heat dissipation. For example, the compressor system may dissipate heat by changing a refrigerant from a gas state to a liquid state to heat the passenger compartment. However, embodiments of this application are not limited thereto.

If the compressor system is in the faulty state, it may indicate that the compressor system cannot heat the passenger compartment by using the physical-state-change heat dissipation, or that heat obtained based on a physical state change is little and is insufficient to meet the heating request, and the vehicle may start the engine to heat the passenger compartment, so as to increase the heating speed.

Optionally, if the compressor system may dissipate heat by changing the refrigerant from the gas state to the liquid state to heat the passenger compartment, the vehicle may further obtain a capacity of the refrigerant. When the capacity of the refrigerant is less than a preset capacity, the refrigerant cannot heat the passenger compartment or the heating speed is slow, and the vehicle may start the engine to heat the passenger compartment, so as to increase the heating speed. The preset capacity may be data calibrated based on a vehicle model and a function of the vehicle in this application. However, embodiments of this application are not limited thereto.

Optionally, a trigger condition for starting the engine may also be that a passenger compartment temperature is less than or equal to a preset low temperature value, that is, when the passenger compartment temperature is low, the engine is started, and the heat generated when the engine works is used to heat the passenger compartment. To more accurately determine that the passenger compartment temperature is low, the trigger condition for starting the engine may be that the passenger compartment temperature is less than or equal to the preset low temperature value, and duration is greater than or equal to preset duration.

The preset low temperature value may be any integer from 5°C to -30°C, or a temperature value less than -30°C. This is not limited in embodiments of this application.

It should be noted that the foregoing trigger condition for starting the engine may be one of the following conditions:
the thermistor is in the faulty state, the water pump is in the faulty state, the heat pump is in the faulty state, the electrical machine is in the motor state or in the generator state, the compressor system is in the faulty state, the passenger compartment temperature is less than or equal to the preset low temperature value, or the passenger compartment temperature is less than or equal to the preset low temperature value, and the duration is greater than or equal to the preset duration.

It should be understood that the thermistor, the water pump, the heat pump, the electrical machine, and the compressor system are all manners used to heat the passenger compartment before the engine is started. However, embodiments of this application are not limited thereto. When these manners are faulty, the engine may be started, and the heat generated when the engine works is used to heat the passenger compartment.

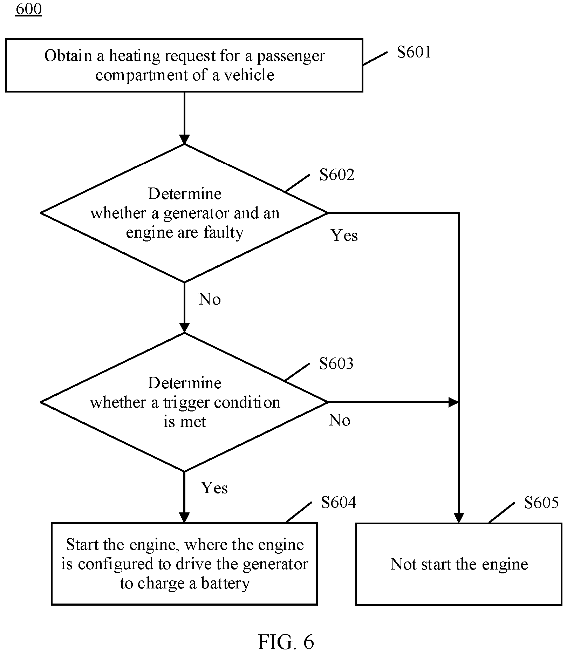

For example, FIG. 6 is a schematic flowchart of an engine starting method 600. As shown in FIG. 6, the method 600 may include the following steps.

S601: Obtain a heating request for a passenger compartment of a vehicle.

That the vehicle obtains the heating request for the passenger compartment means that the vehicle obtains an air conditioner heat generation request, or the vehicle obtains an operation of turning on an air conditioner for heat generation by a user. This is not limited in embodiments of this application.

S602: Determine, based on the heating request, whether a generator and an engine are faulty.

Based on the heating request, the vehicle may determine whether the generator and the engine are faulty, that is, learn whether fault information exists. If the fault information exists, the engine cannot be started, and even if the heating request exists, the engine is not started. If the heating request is obtained, and the generator and the engine are not faulty, that is, a start condition for starting the engine is met, the vehicle may determine whether a trigger condition of the engine is met, that is, perform S603.

S603: Determine whether the trigger condition for starting the engine is met.

The trigger condition for starting the engine may be one or more of the following conditions:
a thermistor is in a faulty state, a water pump is in a faulty state, a heat pump is in a faulty state, an electrical machine is in a motor state or in a generator state, a compressor system is in a faulty state, a passenger compartment temperature is less than or equal to a preset low temperature value, or the passenger compartment temperature is less than or equal to a preset low temperature value, and duration is greater than or equal to preset duration.

The vehicle may learn whether any one or more of the foregoing trigger conditions are met. When any one or more of the foregoing trigger conditions are met, the engine is started, that is, S604 is performed.

If the vehicle learns that none of the foregoing trigger conditions is met, the engine is not started, that is, S605 is performed.

S604: If the trigger condition is met, start the engine, where the engine is configured to drive the generator to charge a battery.

S605: If the trigger condition is not met, not start the engine.

According to the control method provided in embodiments of this application, the engine is started when the start condition and the trigger condition that are for starting the engine are met, so that a function of the engine can be maximized.

In an optional embodiment, the heating request includes a target temperature. The method 300 may further include: stopping the engine when at least one of the following conditions is met and the passenger compartment temperature is greater than or equal to the target temperature:
the thermistor is in a normal state, the water pump is in a normal state, the heat pump is in a normal state, the electrical machine is in a blocked state, or the compressor system is in a normal state. The thermistor is configured to heat the passenger compartment, the water pump is configured to transmit heat of the thermistor, and the heat pump is configured to heat the passenger compartment.

Embodiments of this application further provide a condition for stopping the engine. The engine is stopped when at least one of the following conditions is met:
the thermistor is in the normal state, and the passenger compartment temperature is greater than or equal to the target temperature;
the water pump is in the normal state, and the passenger compartment temperature is greater than or equal to the target temperature;
the heat pump is in the normal state, and the passenger compartment temperature is greater than or equal to the target temperature;
the electrical machine is in the blocked state, and the passenger compartment temperature is greater than or equal to the target temperature; or
the compressor system is in the normal state, and the passenger compartment temperature is greater than or equal to the target temperature.

The condition for stopping the engine may also be referred to as an exit condition. This is not limited in embodiments of this application.

It should be noted that, if the start condition for starting the engine is the heating request, and the trigger condition for starting the engine is that the thermistor is in the faulty state, the condition for stopping the engine may be that the thermistor is in the normal state, and the passenger compartment temperature is greater than or equal to the target temperature. If the start condition for starting the engine is the heating request, and the trigger condition for starting the engine is that the water pump is in the faulty state, the condition for stopping the engine may be that the water pump is in the normal state, and the passenger compartment temperature is greater than or equal to the target temperature. If the start condition for starting the engine is the heating request, and the trigger condition for starting the engine is that the heat pump is in the faulty state, the condition for stopping the engine may be that the heat pump is in the normal state, and the passenger compartment temperature is greater than or equal to the target temperature. If the start condition for starting the engine is the heating request, and the trigger condition for starting the engine is that the electrical machine is in the engine state or in the generator state, the condition for stopping the engine may be that the electrical machine is in the blocked state, and the passenger compartment temperature is greater than or equal to the target temperature. If the start condition for starting the engine is the heating request, and the trigger condition for starting the engine is that the compressor system is in the faulty state, the condition for stopping the engine may be that the compressor system is in the normal state, and the passenger compartment temperature is greater than or equal to the target temperature.

Optionally, if the foregoing start condition for starting the engine further includes that the engine and the generator are not faulty, the condition for stopping the engine may further include that the engine or the generator is faulty.

Optionally, the condition for stopping the engine may further include that there is no heating request for the passenger compartment of the vehicle.

According to the control method provided in embodiments of this application, the condition for stopping the engine is specified, and the engine may stop in a timely manner. This facilitates stable running and improves stability of the vehicle.

In an optional embodiment, the starting an engine of the vehicle based on the heating request in S302 includes: obtaining a status of the engine based on the heating request, where the status of the engine includes an on state or an off state; and starting the engine if the engine is in the off state.

The vehicle may obtain the status of the engine based on the heating request, and determine whether the engine is in the on state. If the engine is in the off state, the engine is started. If the engine is in the on state, a working state of the engine is determined based on a state of charge of the battery.

According to the control method provided in embodiments of this application, before the engine is started, it is determined whether the engine is in the on state, and if the engine is not started, the engine is started. This avoids repeated starting of the engine when the engine is started, which affects running of the vehicle.

Optionally, the foregoing method may further include: outputting prompt information after the engine is in the on state, where the prompt information is used to inform the user that the engine is started based on the heating request.

After starting the engine, the vehicle learns that the engine is in the on state, and may send the prompt information to a display. The prompt information is used to inform the user that the engine is started based on the heating request. The prompt information may be "the engine is started based on an air conditioner requirement". However, embodiments of this application are not limited thereto. The display may also be referred to as a meter. This is not limited in embodiments of this application.

According to the control method provided in embodiments of this application, after the engine is started, the prompt information is used to inform the user that the engine is started based on the heating request, and the user is notified of a status of the vehicle, so that the user knows a running state of the vehicle.

Optionally, the foregoing method may further include: maintaining the on state of the engine if the engine is in the on state; and outputting the prompt information when there is no request for starting the engine other than the heating request, where the prompt information is used to inform the user that the engine is started based on the heating request.

If the engine is in the on state, the on state of the engine is maintained, and the working state of the engine may be determined based on the state of charge of the battery. A request for starting the engine other than the heating request may include a trigger operation that is performed by the user on an engine starting button and that is detected by the vehicle. However, embodiments of this application are not limited thereto.

When there is no request for starting the engine other than the heating request, the engine does not stop rotating because the heating request exists. The prompt information may be output, and the prompt information is used to inform the user that the engine is started based on the heating request. The prompt information may be "the engine is started based on an air conditioner requirement". However, embodiments of this application are not limited thereto.

It should be noted that, when there is no request for starting the engine, the engine should be stopped. However, the air conditioner has a heat generation requirement (namely, the heating request), and stopping of the engine is restricted. In this case, the vehicle may notify, based on the prompt information, the user that the engine is not stopped because the air conditioner has the heat generation requirement. If the air conditioner does not have the heat generation requirement, the engine enters an off state.

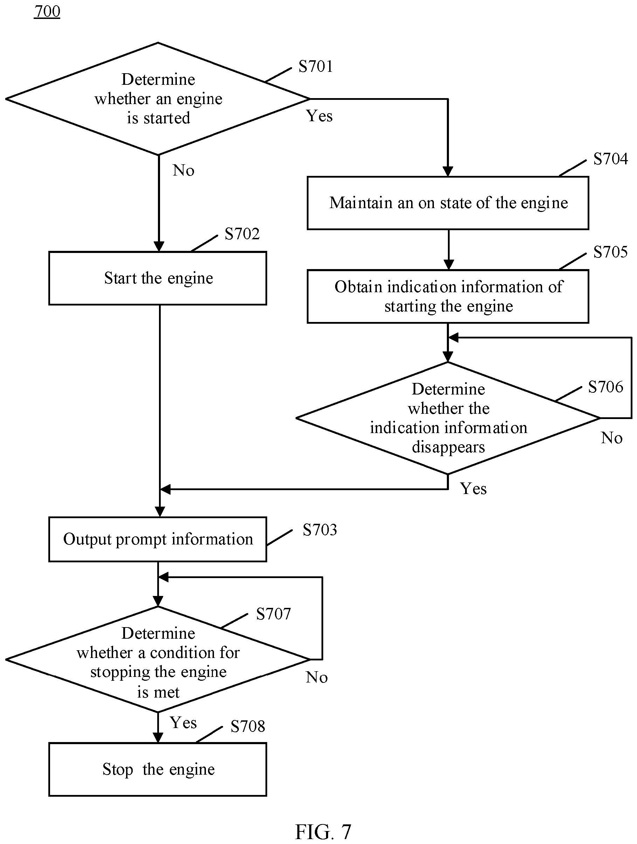

For example, FIG. 7 is a schematic flowchart of a prompt information display method 700. As shown in FIG. 7, the method 700 may include the following steps.

S701: Determine, when a start condition and a trigger condition that are for starting an engine are met, whether the engine is started.

A vehicle may obtain a status of the engine to determine whether the engine is started. If the engine is in an off state, it is determined that the engine is not started. If the engine is not started, the vehicle may start the engine, that is, may perform S702. If the engine is in an on state, it is determined that the engine is started. The vehicle may maintain the on state of the engine, that is, may perform S704.

S702: Start the engine if the engine is not started.

S703: Output prompt information after the engine is started, where the prompt information is "the engine is started based on an air conditioner requirement".

After detecting that the engine is successfully started, the vehicle may output the prompt information.

S704: Maintain the on state of the engine if the engine is started.

If the engine is started, the vehicle may determine a working state of the engine based on a state of charge of a battery.

S705: Obtain indication information of starting the engine, where the indication information does not include the start condition and the trigger condition that are for starting the engine.

If the engine has been started, the indication information of starting the engine exists, and the indication information is information other than the start condition and the trigger condition that are for starting the engine.

S706: Determine whether the indication information disappears.

If the indication information disappears, the vehicle may output the prompt information, that is, perform S703. The prompt information may be "the engine is started based on an air conditioner requirement". If the indication information does not disappear, the vehicle may continue to perform monitoring, that is, perform S706.

It should be noted that, that the indication information disappears in embodiments of this application means that there is no request for starting the engine other than the start condition and the trigger condition that are for starting the engine.

S707: Determine whether a condition for stopping the engine is met.

If the condition for stopping the engine is met, the engine is stopped, that is, S708 is performed. If the condition for stopping the engine is not met, whether the condition for stopping the engine is met may continue to be determined, that is, S707 is performed.

S708: Stop the engine if the condition for stopping the engine is met.

According to the control method provided in embodiments of this application, when the engine has been started, an air conditioner heat generation request is obtained, and an engine starting condition is met. When previous indication information of starting the engine disappears, the prompt information is used to inform the user that the engine is started based on the air conditioner heat generation request, and the user is notified of a status of the vehicle, so that the user knows a running state of the vehicle.

An embodiment of this application further provides a troubleshooting method. If a vehicle cannot obtain a passenger compartment temperature or a flag bit of the passenger compartment temperature is invalid, a status of an engine is obtained. If the engine is in an on state, the on state of the engine is maintained. If the engine is in an off state, the engine is not started.

If the vehicle cannot obtain a heating request for a passenger compartment, the vehicle obtains the status of the engine. If the engine is in the on state, the on state of the engine is maintained. If the engine is in the off state, the engine is not started.

If the vehicle cannot obtain a status of a thermistor or a water pump, the vehicle obtains the status of the engine. If the engine is in the on state, the on state of the engine is maintained. If the engine is in the off state, the engine is not started.

The sequence numbers of the foregoing processes do not mean execution sequences. The execution sequences of the processes should be determined based on functions and internal logic of the processes, and should not constitute any limitation on implementation processes of embodiments of this application.

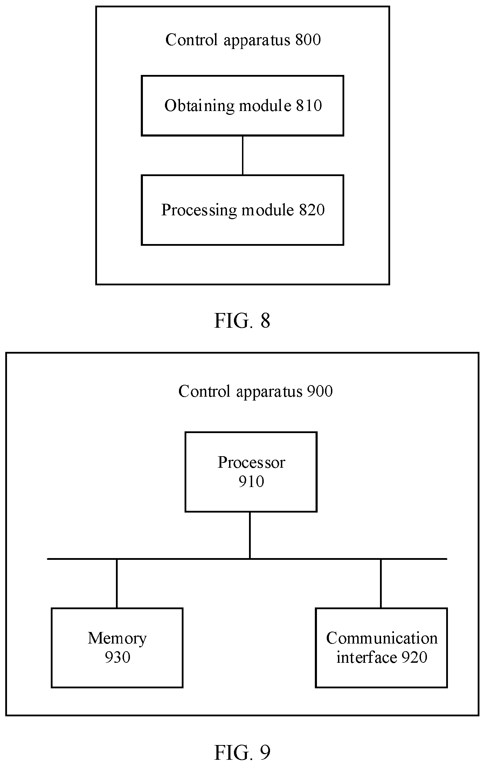

The foregoing describes in detail the methods in embodiments of this application with reference to FIG. 1 to FIG. 7. The following describes in detail apparatuses in embodiments of this application with reference to FIG. 8 and FIG. 9.

FIG. 8 shows a control apparatus 800 according to an embodiment of this application. The control apparatus 800 includes an obtaining module 810 and a processing module 820. The obtaining module 810 is configured to: obtain a heating request for a passenger compartment of a vehicle. The processing module 820 is configured to: start an engine of the vehicle based on the heating request; heat the passenger compartment by using heat generated by the engine; and if a state of charge of a battery of the vehicle is greater than or equal to a preset state of charge, and a charging power of the battery is greater than or equal to a preset charging power, control the engine to idle and control a generator to be in a state of not generating power.

Optionally, the processing module 820 is further configured to: if the state of charge of the battery is greater than or equal to the preset state of charge, and the charging power of the battery is less than the preset charging power, control the engine to drive the generator to charge the battery.

Optionally, the processing module 820 is further configured to: determine a generation power of the generator as an allowed maximum generation power; and charge the battery by using the generator.

Optionally, the heating request includes a target temperature. The obtaining module 810 is further configured to: obtain a generation power of the generator based on the target temperature and a correspondence, where the correspondence includes a correspondence between a plurality of temperatures and a plurality of generation powers. The processing module 820 is further configured to: charge the battery by using the generator.

Optionally, the obtaining module 810 is further configured to: when it is detected that the battery is charged, obtain a passenger compartment temperature, and record charging duration of the battery. The processing module 820 is further configured to: when at least one of the following conditions is met, stop controlling the engine to drive the generator to charge the battery: The charging duration is greater than or equal to preset charging duration; and the passenger compartment temperature is greater than or equal to a preset temperature.

Optionally, the obtaining module 810 is further configured to: obtain a status of a thermistor based on the heating request, where the status of the thermistor includes a normal state or a faulty state, and the thermistor is configured to heat the passenger compartment. The processing module 820 is further configured to: start the engine if the thermistor is in the faulty state.

Optionally, the obtaining module 810 is further configured to: obtain a status of a water pump based on the heating request, where the status of the water pump includes a normal state or a faulty state, the water pump is configured to transmit heat of a thermistor, and the thermistor is configured to heat the passenger compartment. The processing module 820 is further configured to: start the engine if the water pump is in the faulty state.

Optionally, the obtaining module 810 is further configured to: obtain a status of a heat pump based on the heating request, where the status of the heat pump includes a normal state or a faulty state, and the heat pump is configured to heat the passenger compartment. The processing module 820 is further configured to: start the engine if the heat pump is in the faulty state.

Optionally, the obtaining module 810 is further configured to: obtain a status of an electrical machine based on the heating request, where the status of the electrical machine includes at least one of the following: a motor state, a blocked state, and a generator state, and the electrical machine is configured to supply power to the vehicle. The processing module 820 is further configured to: start the engine if the electrical machine is in the motor state or in the generator state.

Optionally, the obtaining module 810 is further configured to: obtain a status of a compressor system of an air conditioner of the vehicle based on the heating request, where the status of the compressor system includes a normal state or a faulty state, and the compressor system is configured to heat the passenger compartment. The processing module 820 is further configured to: start the engine if the compressor system is in the faulty state.

Optionally, the heating request includes a target temperature. The processing module 820 is further configured to: stop the engine when at least one of the following conditions is met and the passenger compartment temperature is greater than or equal to the target temperature: the thermistor is in the normal state, the water pump is in the normal state, the heat pump is in the normal state, the electrical machine is in the blocked state, or the compressor system is in the faulty state. The thermistor is configured to heat the passenger compartment, the water pump is configured to transmit the heat of the thermistor, the heat pump is configured to heat the passenger compartment, the electrical machine is configured to supply power to the vehicle, and the compressor system is in the normal state.

Optionally, the obtaining module 810 is further configured to: obtain a status of the engine based on the heating request, where the status of the engine includes an on state or an off state. The processing module 820 is further configured to: start the engine if the engine is in the off state.

Optionally, the processing module 820 is further configured to: output prompt information after the engine is in the on state, where the prompt information is used to inform a user that the engine is started based on the heating request.

Optionally, the processing module 820 is further configured to: maintain the on state of the engine if the engine is in the on state; and output the prompt information when there is no request for starting the engine other than the heating request, where the prompt information is used to inform the user that the engine is started based on the heating request.

It should be understood that the control apparatus 800 herein is embodied in a form of a function module. The term "module" herein may be an application-specific integrated circuit ASIC, an electronic circuit, a processor (for example, a shared processor, a dedicated processor, or a group processor) and a memory that are configured to execute one or more software or firmware programs, a combined logic circuit, and/or another appropriate component supporting the described function.

The control apparatus 800 has a function of implementing corresponding steps performed by the vehicle in the foregoing method embodiments. The foregoing function may be implemented by hardware, or may be implemented by executing corresponding software by hardware. The hardware or the software includes one or more modules corresponding to the function.

In embodiments of this application, the image processing apparatus 800 in FIG. 8 may alternatively be a chip or a chip system, for example, a system on chip (system on chip, SoC).

FIG. 9 is a block diagram of another control apparatus 900 according to an embodiment of this application. The control apparatus 900 includes a processor 910, a communication interface 920, and a memory 930. The processor 910, the communication interface 920, and the memory 930 communicate with each other through an internal connection path. The memory 930 is configured to store instructions. The processor 920 is configured to execute the instructions stored in the memory 930, to control the communication interface 920 to send a signal and/or receive a signal.

It should be understood that the control apparatus 900 may be specifically the vehicle in the foregoing method embodiments, or functions of the vehicle in the foregoing method embodiments may be integrated into the control apparatus 900, and the control apparatus 900 may be configured to perform steps and/or procedures corresponding to the vehicle in the foregoing method embodiments. Optionally, the memory 930 may include a read-only memory and a random access memory, and provide instructions and data for the processor. A part of the memory may further include a non-volatile random access memory. For example, the memory may further store information about a device type. The processor 910 may be configured to execute the instructions stored in the memory, and when the processor executes the instructions, the processor may perform steps and/or procedures corresponding to the vehicle in the foregoing method embodiments.

In an implementation process, steps in the foregoing methods may be implemented by using a hardware integrated logical circuit in a processor, or by using instructions in a form of software. The steps of the methods disclosed with reference to embodiments of this application may be directly performed by a hardware processor, or may be performed by using a combination of a hardware module and a software module in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads the instructions in the memory and completes the steps in the foregoing methods in combination with hardware of the processor. To avoid repetition, details are not described herein again.

An embodiment of this application further provides a computer-readable storage medium. The computer-readable storage medium is configured to store a computer program, and the computer program is used to implement the method corresponding to the vehicle in the foregoing embodiments.

An embodiment of this application further provides a chip system. The chip system is configured to support the vehicle in the foregoing method embodiments in implementing the functions shown in embodiments of this application.

An embodiment of this application provides a computer program product. The computer program product includes a computer program (which may also be referred to as code or instructions). When the computer program is run on a computer, the computer may perform the method corresponding to the vehicle in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a heating request for a passenger compartment of a vehicle;
starting an engine of the vehicle based on the heating request;
heating the passenger compartment by using heat generated by the engine; and
if a state of charge of a battery of the vehicle is greater than or equal to a preset state of charge, and a charging power of the battery is greater than or equal to a preset charging power, controlling the engine to idle and controlling a generator to be in a state of not generating power.

2. The method according to claim 1, wherein the method further comprises:
if the state of charge of the battery is greater than or equal to the preset state of charge, and the charging power of the battery is less than the preset charging power, controlling the engine to drive the generator to charge the battery.

3. The method according to claim 2, wherein the controlling the engine to drive the generator to charge the battery comprises:
determining a generation power of the generator as an allowed maximum generation power; and
charging the battery by using the generator.

4. The method according to claim 2, wherein the heating request comprises a target temperature; and
the controlling the engine to drive the generator to charge the battery comprises:
obtaining a generation power of the generator based on the target temperature and a correspondence, wherein the correspondence comprises a correspondence between a plurality of temperatures and a plurality of generation powers; and
charging the battery by using the generator.

5. The method according to any one of claims 1 to 4, wherein the method further comprises:
when it is detected that the battery is being charged, obtaining a passenger compartment temperature, and recording charging duration of the battery; and
when at least one of the following conditions is met, stopping controlling the engine to drive the generator to charge the battery:
the charging duration is greater than or equal to preset charging duration; and
the passenger compartment temperature is greater than or equal to a preset temperature.

6. The method according to any one of claims 1 to 5, wherein the starting an engine of the vehicle based on the heating request comprises:
obtaining a status of a thermistor based on the heating request, wherein the status of the thermistor comprises a normal state or a faulty state, and the thermistor is configured to heat the passenger compartment; and
starting the engine if the thermistor is in the faulty state.

7. The method according to any one of claims 1 to 5, wherein the starting an engine of the vehicle based on the heating request comprises:
obtaining a status of a water pump based on the heating request, wherein the status of the water pump comprises a normal state or a faulty state, the water pump is configured to transmit heat of a thermistor, and the thermistor is configured to heat the passenger compartment; and
starting the engine if the water pump is in the faulty state.

8. The method according to any one of claims 1 to 5, wherein the starting an engine of the vehicle based on the heating request comprises:
obtaining a status of a heat pump based on the heating request, wherein the status of the heat pump comprises a normal state or a faulty state, and the heat pump is configured to heat the passenger compartment; and
starting the engine if the heat pump is in the faulty state.

9. The method according to any one of claims 1 to 5, wherein the starting an engine of the vehicle based on the heating request comprises:
obtaining a status of an electrical machine based on the heating request, wherein the status of the electrical machine comprises at least one of the following: a motor state, a blocked state, and a generator state, and the electrical machine is configured to supply power to the vehicle; and
starting the engine if the electrical machine is in the motor state or in the generator state.

10. The method according to any one of claims 1 to 5, wherein the starting an engine of the vehicle based on the heating request comprises:
obtaining a status of a compressor system of an air conditioner of the vehicle based on the heating request, wherein the status of the compressor system comprises a normal state or a faulty state, and the compressor system is configured to heat the passenger compartment; and
starting the engine if the compressor system is in the faulty state.

11. The method according to any one of claims 1 to 10, wherein the heating request comprises the target temperature; and
the method further comprises:
stopping the engine when at least one of the following conditions is met and the passenger compartment temperature is greater than or equal to the target temperature:
the thermistor is in the normal state, the water pump is in the normal state, the heat pump is in the normal state, the electrical machine is in the blocked state, or the compressor system of the air conditioner of the vehicle is in the normal state, wherein
the thermistor is configured to heat the passenger compartment, the water pump is configured to transmit the heat of the thermistor, the heat pump is configured to heat the passenger compartment, the electrical machine is configured to supply power to the vehicle, and the compressor system is configured to heat the passenger compartment.

12. The method according to any one of claims 1 to 11, wherein the starting an engine of the vehicle based on the heating request comprises:
obtaining a status of the engine based on the heating request, wherein the status of the engine comprises an on state or an off state; and
starting the engine if the engine is in the off state.

13. The method according to claim 12, wherein the method further comprises:
outputting prompt information after the engine is in the on state, wherein the prompt information is used to inform a user that the engine is started based on the heating request.

14. The method according to claim 12 or 13, wherein the method further comprises:
maintaining the on state of the engine if the engine is in the on state; and
outputting the prompt information when there is no request for starting the engine other than the heating request, wherein the prompt information is used to inform the user that the engine is started based on the heating request.

15. A control apparatus, comprising:
an obtaining module, configured to obtain a heating request for a passenger compartment of a vehicle;
a processing module, configured to: start an engine of the vehicle based on the heating request, and heat the passenger compartment by using heat generated by the engine; and
if a state of charge of a battery of the vehicle is greater than or equal to a preset state of charge, and a charging power of the battery is greater than or equal to a preset charging power, control the engine to idle and control a generator to be in a state of not generating power.

16. The control apparatus according to claim 15, wherein the processing module is further configured to:
if the state of charge of the battery is greater than or equal to the preset state of charge, and the charging power of the battery is less than the preset charging power, control the engine to drive the generator to charge the battery.

17. The control apparatus according to claim 16, wherein the processing module is further configured to:
determine a generation power of the generator as an allowed maximum generation power; and
charge the battery by using the generator.

18. The control apparatus according to claim 16, wherein the heating request comprises a target temperature;
the obtaining module is further configured to:
obtain a generation power of the generator based on the target temperature and a correspondence, wherein the correspondence comprises a correspondence between a plurality of temperatures and a plurality of generation powers; and
the processing module is further configured to:
charge the battery by using the generator.

19. The control apparatus according to any one of claims 15 to 18, wherein the obtaining module is further configured to:
when it is detected that the battery is being charged, obtain a passenger compartment temperature, and record charging duration of the battery; and
the processing module is further configured to:
when at least one of the following conditions is met, stop controlling the engine to drive the generator to charge the battery:
the charging duration is greater than or equal to preset charging duration; and
the passenger compartment temperature is greater than or equal to a preset temperature.

20. The control apparatus according to any one of claims 15 to 19, wherein the obtaining module is further configured to:
obtain a status of a thermistor based on the heating request, wherein the status of the thermistor comprises a normal state or a faulty state, and the thermistor is configured to heat the passenger compartment; and
the processing module is further configured to:
start the engine if the thermistor is in the faulty state.

21. The control apparatus according to any one of claims 15 to 19, wherein the obtaining module is further configured to:
obtain a status of a water pump based on the heating request, wherein the status of the water pump comprises a normal state or a faulty state, the water pump is configured to transmit heat of a thermistor, and the thermistor is configured to heat the passenger compartment; and
the processing module is further configured to:
start the engine if the water pump is in the faulty state.

22. The control apparatus according to any one of claims 15 to 19, wherein the obtaining module is further configured to:
obtain a status of a heat pump based on the heating request, wherein the status of the heat pump comprises a normal state or a faulty state, and the heat pump is configured to heat the passenger compartment; and
the processing module is further configured to:
start the engine if the heat pump is in the faulty state.

23. The control apparatus according to any one of claims 15 to 19, wherein the obtaining module is further configured to:
obtain a status of an electrical machine based on the heating request, wherein the status of the electrical machine comprises at least one of the following: a motor state, a blocked state, and a generator state, and the electrical machine is configured to supply power to the vehicle; and
the processing module is further configured to:
start the engine if the electrical machine is in the motor state or in the generator state.

24. The control apparatus according to any one of claims 15 to 19, wherein the obtaining module is further configured to:
obtain a status of a compressor system of an air conditioner of the vehicle based on the heating request, wherein the status of the compressor system comprises a normal state or a faulty state, and the compressor system is configured to heat the passenger compartment; and
the processing module is further configured to:
start the engine if a capacity of a refrigerant is less than a preset capacity.

25. The control apparatus according to any one of claims 15 to 24, wherein the heating request comprises a target temperature; and
the processing module is further configured to:
stop the engine when at least one of the following conditions is met and the passenger compartment temperature is greater than or equal to the target temperature:
the thermistor is in the normal state, the water pump is in the normal state, the heat pump is in the normal state, the electrical machine is in the blocked state, or the compressor system of the air conditioner of the vehicle is in the normal state, wherein
the thermistor is configured to heat the passenger compartment, the water pump is configured to transmit the heat of the thermistor, the heat pump is configured to heat the passenger compartment, the electrical machine is configured to supply power to the vehicle, and the compressor system is configured to heat the passenger compartment.

26. The control apparatus according to any one of claims 15 to 25, wherein the obtaining module is further configured to:
obtain a status of the engine based on the heating request, wherein the status of the engine comprises an on state or an off state; and
the processing module is further configured to:
start the engine if the engine is in the off state.

27. The control apparatus according to claim 26, wherein the processing module is further configured to:
output prompt information after the engine is in the on state, wherein the prompt information is used to inform a user that the engine is started based on the heating request.

28. The control apparatus according to claim 26 or 27, wherein the processing module is further configured to:
maintain the on state of the engine if the engine is in the on state; and
output the prompt information when there is no request for starting the engine other than the heating request, wherein the prompt information is used to inform the user that the engine is started based on the heating request.

29. A vehicle, comprising the apparatus according to any one of claims 15 to 28.

30. A computer-readable storage medium, wherein the computer-readable storage medium stores a computer program or instructions, and the computer program or the instructions are used to implement the method according to any one of claims 1 to 14.
